# EUROPÄISCHE PATENTSCHRIFT

(11) **EP 0 687 395 B1**
(45) Veröffentlichungstag und Bekanntmachung des Hinweises auf die Patenterteilung: **11.11.1998**
(21) Anmeldenummer: 94906864.7
(22) Anmeldetag: 11.02.1994
(51) Int. Cl.: H02P 7/74, H02P 7/67

(54) **VERFAHREN ZUR SCHADENSVERHÜTUNG AN NUMERISCH GESTEUERTEN MASCHINEN BEI NETZAUSFALL**
PROCESS FOR PREVENTING DAMAGE TO NUMERICALLY CONTROLLED MACHINES IN THE EVENT OF A POWER FAILURE
PROCEDE PERMETTANT DE PREVENIR LES DETERIORATIONS DE MACHINES A COMMANDE NUMERIQUE EN CAS DE PANNE DE SECTEUR

(30) Priorität: 01.03.1993 DE 4306307
(43) Veröffentlichungstag der Anmeldung: 20.12.1995
(73) Patentinhaber: SIEMENS AKTIENGESELLSCHAFT, 80333 München (DE)
(72) Erfinder: LORY, Bernd, D-09130 Chemnitz (DE); HÜGEL, Harald, D-91074 Herzogenaurach (DE); KÜNZEL, Stefan, D-91056 Erlangen (DE)
(86) Internationale Anmeldenummer: DE9400143
(87) Internationale Veröffentlichungsnummer: WO9421030

(56) Entgegenhaltungen:
- WO-A-90/15474
- DE-A- 3 347 113
- PATENT ABSTRACTS OF JAPAN vol. 13, no. 113 (E-729) 17. März 1989 & JP,A,63 283 498 (MEIDENSHA ELECTRIC MFG CO) 21. November 1988
- PATENT ABSTRACTS OF JAPAN vol. 10, no. 197 (E-418) (2253) 10. Juli 1986 & JP,A,61 039 896 (TOSHIBA CORP) 26. Februar 1986

## Beschreibung

Die Erfindung bezieht sich auf ein Verfahren zur Schadensverhütung an numerisch gesteuerten Maschinen bei Netzausfall.

Aus der Patentschrift 154 556 der Deutschen Demokratischen Republik ist eine Zwanglaufsteuerung an Werkzeugmaschinen mit einer Schaltungsanordnung zur Schadensverhütung bekannt, bei der bereits die kinetische Energie eines Gleichstromleitantriebs bei Netzausfall zur Versorgung eines Werkzeugzustellmotors verwendet wird, um einen Notrückzug der Werkzeugspindel durchführen zu können. Dazu ist jedoch eine gesonderte Schalteinheit und ein zusätzlicher schaltungstechnischer Aufwand zur Verbindung des Leitantriebs mit dem Werkzeugzustellmotor erforderlich. Außerdem wird für die Versorgung der Steuerungen und der Regelkreise ein extra Motor am Netz betrieben, der einen Generator sowie eine Schwungmasse antreibt, wobei der Generator auch im Normalbetrieb ein Hilfsnetz speist, durch das die Steuerungen und Regelkreise der Einrichtung versorgt werden. Die notwendige Einheit aus Motor-Generator und Schwungmasse sowie der zusätzliche schaltungstechnische Aufwand zur Versorgung des Werkzeugzustellmotors ist konstruktiv und wirtschaftlich aufwendig. Außerdem kann die vom Leitantrieb zurückgespeiste Energie nicht geregelt werden.

Ferner ist in der WO-A 90/15474 eine Einrichtung zur Antriebsregelung einer Gruppe von elektrischen Motoren beschrieben, die aus einem Gleichstromzwischenkreis über einen Umrichter gespeist werden, wobei vorgesehen ist, bei Netzausfall die Drehzahl eines Motors allmählich zu verringern (abzubremsen) zur Erzeugung regenerativer elektrischer Energie, die in den Gleichstromzwischenkreis des Umrichters eingespeist wird, um die Gleichstromzwischenkreisspannung auf ihrem Sollwert zu halten.

Eine ähnliche Einrichtung ist aus der DE-A-33 47 113 bekannt, bei der zur sicherstellung des geordneten Abspinnens einer Zwirn- oder Spinnmaschine bei Netzausfall elektrische Energie von den auslaufenden, als Generator arbeitenden Asynchronmotoren der Einzelantriebe durch eine Kopplung der Wechselrichter über ihren Gleichstromzwischenkreis auf das Antriebssystem der Nebenaggregate übertragen wird.

Aufgabe der Erfindung ist es, auf einfache Weise eine Versorgungsspannung für mindestens einen Achsantriebsmotor aus der kinetischen Energie von mindestens einem anderen, bei Netzausfall auslaufenden Motor zu erhalten, so daß ein lagegeregelter, programmierter Notrückzug erfolgt.

Diese Aufgabe wird gelöst durch ein Verfahren zur Schadensverhütung an numerisch gesteuerten Maschinen bei Netzausfall, wobei
1.1 die numerisch gesteuerte Maschine mindestens zwei geregelte Achsantriebsmotoren aufweist, die aus einem Gleichstromzwischenkreis über je einen Umrichter gespeist werden,
1.2 bei Netzausfall mindestens ein Motor in den Generatorbetrieb geschaltet und über den zugehörigen Umrichter so geregelt wird, daß die Zwischenkreisenergie für die Zeit des Auslaufes dieses mindestens einen Motors erhalten bleibt,
1.3 die weiteren Motoren während dieser Zeit aus dem Zwischenkreis weiter gespeist werden und die Bearbeitungsvorgänge durch Ansteuerung der zugehörigen weiteren Achsantriebe in einem lagegeregelten, programmierten Notrückzug des Werkzeugs aus dem Werkstück abgebrochen werden.

Eine erste vorteilhafte Ausbildung dieses Verfahrens ist dadurch gekennzeichnet, daß zur Regelung des Generatorbetriebs eine Regelgröße aus dem Spannungsistwert des Zwischenkreises und einem vorgegebenen Spannungssollwert gebildet wird, aus der Regelgröße eine drehmomentproportionale Größe als Bremsmoment erzeugt wird und anstelle des Soll-Drehmoments auf den Regelkreis des Generators gegeben wird.

Weitere vorteilhafte Ausbildungen der Erfindung, betreffend die Regelung des Generators sowie die Erzeugung von Versorgungsspannungen für die Steuerung und die Regelkreise, sind Gegenstand der Unteransprüche.

Ein Ausführungsbeispiel der Erfindung wird im folgenden anhand der Zeichnung näher beschrieben. Dabei zeigen:
- FIG 1: ein Schaltbild einer Einrichtung zur Durchführung des Verfahrens,
- FIG 2: ein Schaltbild zur Erzeugung einer Versorgungsspannung für numerische Steuerung.

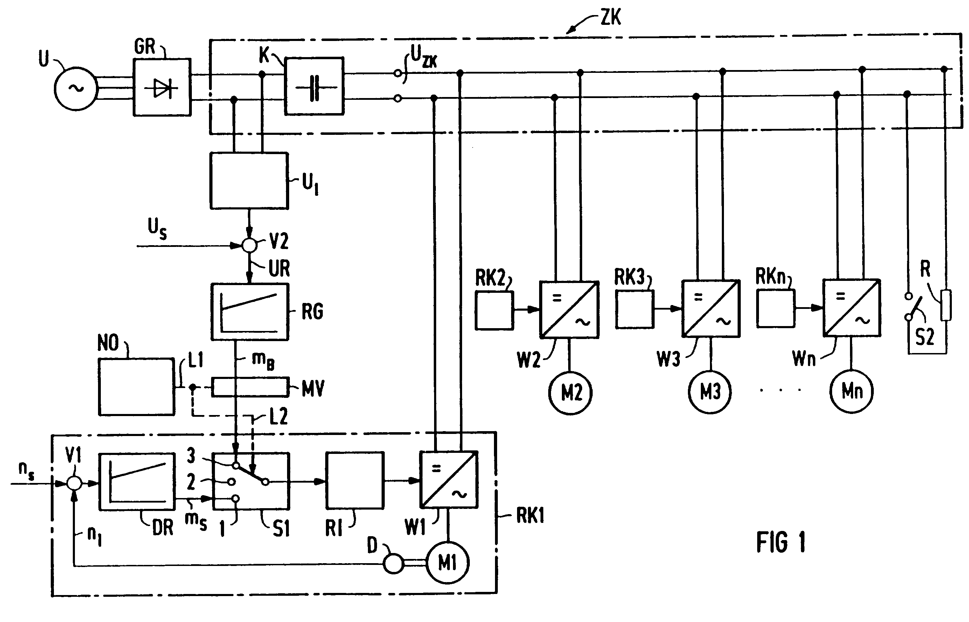

FIG 1 zeigt das Schaltbild einer einrichtung zur Durchführung des erfindungsgemäßen Verfahrens. Dabei wird von einem Drehstromnetz über einen Gleichrichter GR und Glättungsmittel K eine Zwischenkreisspannung UZK gebildet. Von dieser Zwischenkreisspannung U_{ZK} werden Achsantriebsmotoren M1 bis Mn einer Werkzeugmaschine über Wechselrichter W1 bis Wn gespeist. Desweiteren läßt sich über einen Schalter S2 ein Widerstand an die Zwischenkreisspannung U_{ZK} schalten. Die Achsantriebsmotoren M1 bis Mn werden über Regelkreise RK geregelt. Ein solcher Regelkreis ist der Ubersichtlichkeit halber nur für den Achsantriebsmotor M1 dargestellt. Dabei wird eine Regelgröße aus einem Drehzahlsollwert n_{S} und einem Drehzahlistwert n_{I} gebildet und auf den Eingang eines Drehzahlreglers DR gegeben. Am Ausgang des Drehzahlreglers DR wird ein Drehmomentsollwert m_{S} über Schaltmittel S1 an den Stromregler RI über den der Wechselrichter W1 angesteuert wird, gegeben. Der vom Wechselrichter W1 gespeiste Motor M1 verfügt über einen Drehzahlgeber D zur Erzeugung des Lage- und Drehzahlistwertes n_{I} der zur Regelung auf den Vergleicher V zurückgeführt ist. Das Schaltmittel S1 verfügt über drei mögliche Einstellungen 1, 2, 3, wobei auf den Anschluß 1 der Ausgang des Drehzahlreglers DR geführt ist, der Anschluß 2 nicht belegt ist und der Anschluß 3 über eine Drehmomentvergleichsvorrichtung MV mit einem Regelglied RG verbunden ist.

Am Ausgang des Gleichrichters GR für den Zwischenkreis ZK wird über ein Spannungsglied ein Spannungsistwert U_{I} gebildet und auf einen Vergleicher V2 gegeben, an dessen zweiten Eingang ein Spannungssollwert U_{S} vorgegeben wird. Die Regelgröße U_{R} am Ausgang des Vergleichers wird auf den Eingang des Regelgliedes RG zur Erzeugung eines Bremsdrehmomentes m_{B} gegeben.

Das Schaltmittel S1 wird von einer Netzausfallerkennung NO sowie von der Drehmomentvergleichsvorrichtung MV angesteuert.

Im normalen Betriebsfall werden die Motoren M1 bis Mn über die Wechselrichter W1 bis Wn aus dem Zwischenkreis ZK versorgt und über ihre Regelstrecken RK1 bis RKn entsprechend den Vorgaben des Steuerprogramms geregelt. Im Regelkreis des ersten Motors M1 befindet sich das Schaltmittel S1 für den Normalbetrieb in Stellung 1. Wenn nun ein Netzausfall vorliegt, wird die Netzausfallerkennung N0 aktiviert und bringt über die Wirklinie L1 den Schalter von Stellung 1 in Stellung 3, wodurch dem Stromregler RI ein Bremsmoment m_{B} aufgeschaltet wird. Dieses Bremsmoment führt dazu, daß der Motor M1 als Generator betrieben wird und über den Wechselrichter W1, der nun als Gleichrichter arbeitet, elektrische Energie in den Zwischenkreis ZK zurückgespeist wird. Das Bremsmoment m_{B} wird geregelt, indem vom Zwischenkreis ZK eine Istspannung U_{I} abgegriffen wird und mit einer vorgebbaren Sollspannung U_{S} verglichen wird. Das Vergleichsergebnis, also die Regelgröße U_{R}, wird auf den Eingang eines Regelglieds RG gegeben, an dessen Ausgang das Bremsmoment m_{B} erzeugt wird. Im Drehmomentvergleicher MV wird festgestellt, ob das Drehmoment m_{B} größer oder gleich Null oder kleiner Null ist. Falls das Bremsmoment m_{B} kleiner Null ist, wird über die Wirklinie L2 das Schaltmittel S1 in die Stellung 2 verbracht, so daß der Motor M1 "leer" läuft. Auf diese Weise wird die Zwischenkreisspannung U_{ZK} solange auf einen konstanten Wert geregelt, solange die kinetische Energie des Motors M1 ausreicht. Durch die vorhandene Zwischenkreisenergie können dann einer oder mehrere der Motoren M2 bis Mn noch betrieben werden. Angenommen, der Motor M2 treibt die Vorschubspindel des Werkzeugs, so kann über diese Spindel ein geregelter Rückzug des Werkzeugs durchgeführt werden, so daß eine unkontrollierte Auslaufbewegung und damit die Gefahr der Zerstörung von Werkzeug und/oder Werkstück verhindert wird.

Die Versorgungsspannung für die numerische Steuerung könnte bei Netzausfall aus der Zwischenkreisspannung U_{ZK} durch einen Gleichstromumrichter abgeleitet werden. Da jedoch bei herkömmlichen Systemen dieser Art zur Versorgung der Motoren M1 bis Mn in der Regel Standard-Module verwendet werden, kann zur Erzeugung einer Versorgungsspannung für die numerische Steuerung auf ein solches Standard-Modul zurückgegriffen werden.

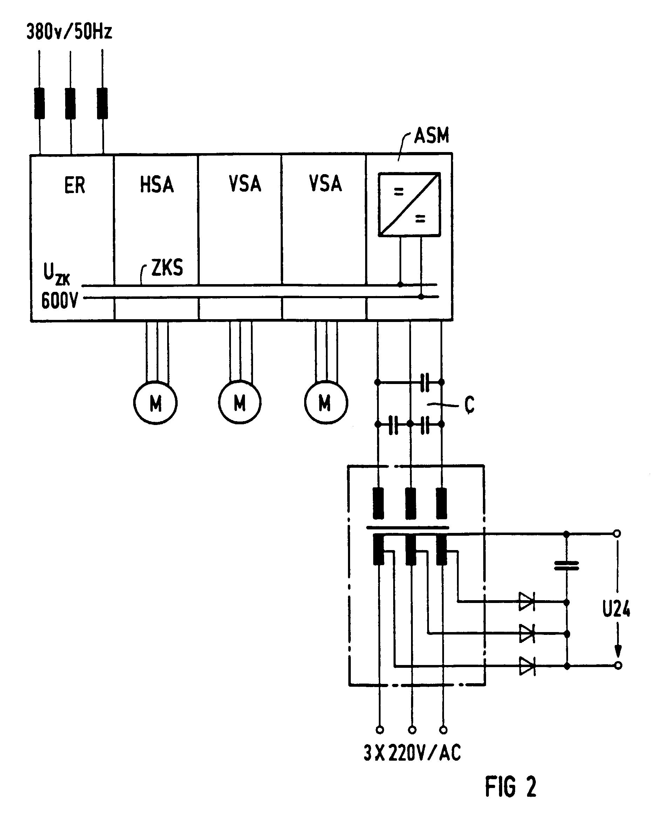

FIG 2 zeigt eine solche Anordnung aus Standard-Modulen. Sie besteht aus einem Modul ER für die Ein- und Rückspeisung aus dem Netz, das die Zwischenkreisspannung U_{ZK} von 600 V generiert und auf eine sogenannte Zwischenkreisschiene ZKS gibt. An dieser Zwischenkreisschiene sind die Module für den Hauptspindelantrieb HSA und für Vorschubantriebe VSA angeschlossen. Zur Erzeugung der Versorgungsspannung für die numerische Steuerung ist weiterhin ein Asynchronmotor-Modul ASM, das im wesentlichen aus einem Netzteil besteht, angeschlossen. Von diesem Standard-Modul ASM wird jedoch nicht ein Asynchronmotor gespeist (wofür es eigentlich vorgesehen ist), sondern ein Transformator mit Potentialtrennung, bei dem primärseitig noch Siebglieder C vorgesehen sind. Zur Erzeugung einer Kleinspannung U24 kann ein Trafo mit sekundärseitigem Abgriff und ein Gleichrichter vorgesehen werden.

Im Ausführungsbeispiel wird lediglich die Bremsenergie des Motors M1, d.h. in der Regel die Bremsenergie des Hauptspindelmotors zur Aufrechterhaltung des Zwischenkreises genutzt. Es ist aber möglich, auch die Bremsenergie weiterer Antriebe bei Netzausfall zu nutzen, um die numerische Steuerung und die Antriebe weiterhin betriebsfähig zu erhalten und einen lagegeregelten, programmierten Notrückzug des Werkzeugs aus dem Werkstück zu ermöglichen. Werkzeugbruch bei Netzausfall ist damit ausgeschlossen, da die größte Gefahr nur dann vorhanden ist, wenn der Hauptspindelantrieb mit hoher Drehzahl arbeitet. Da die größte kinetische Energie in der Hauptspindel gespeichert ist, kann dieser bei Netzausfall auch die meiste Energie zur Energierückspeisung liefern. Mit anderen Worten: Wenn sich die Hauptspindel nicht dreht, also keine kinetische Energie vorhanden ist, muß auch kein Notrückzug durchgeführt werden, da kein Schaden entstehen kann. Die Energiereserve des Hauptspindelantriebs steht also im Zusammenhang mit der Zeit, die notwendig ist, die numerische Steuerung, die Vorschubantriebe und die Hilfsaggregate betriebsfähig zu halten.

## Patentansprüche

1. Verfahren zur Schadensverhütung an numerisch gesteuerten Maschinen bei Netzausfall, wobei
1.1 die numerisch gesteuerte Maschine mindestens zwei geregelte Achsantriebsmotoren (M1...Mn) aufweist, die aus einem Gleichstromzwischenkreis (ZK) über je einen Umrichter (W1...Wn) gespeist werden,
1.2 bei Netzausfall mindestens ein Motor (M1) in den Generatorbetrieb geschaltet und über den zugehörigen Umrichter (W1) so geregelt wird, daß die Zwischenkreisenergie für die Zeit des Auslaufes dieses mindestens einen Motors (M1) erhalten bleibt,
1.3 die weiteren Motoren (M2...Mn) während dieser Zeit aus dem Zwischenkreis (ZK) weiter gespeist werden und die Bearbeitungsvorgänge durch Ansteuerung der zugehörigen weiteren Achsantriebe in einem lagegeregelten, programmierten Notrückzug des Werkzeugs aus dem Werkstück abgebrochen werden.

2. Verfahren nach Anspruch 1, wobei
2.1 zur Regelung des Generatorbetriebs eine Regelgröße (U_{R}) aus dem Spannungsistwert (U_{I}) des Zwischenkreises (ZK) und einem vorgegebenen Spannungssollwert (U_{S}) gebildet wird,
2.2 aus der Regelgröße eine drehmomentproportionale Größe als Bremsmoment (m_{B}) erzeugt wird und anstelle des Soll-Drehmoments (m_{S}) auf den Regelkreis des Generators gegeben wird.

3. Verfahren nach Anspruch 2, wobei im Regelkreis (RK1) des Generators (M1) Umschaltmittel vorgesehen sind, die bei Netzausfall den Drehzahlregler (DR) von der Regelstrecke abtrennen und das Bremsmoment (m_{B}) aufschalten.

4. Verfahren nach Anspruch 2 oder 3, wobei das Bremsmoment (m_{B}) nur für Werte größer Null auf die Regelstrecke des Regelkreises (RK) gegeben wird und für Werte kleiner Null kein Drehmoment vorgegeben wird.

5. Verfahren nach einem der vorstehenden Ansprüche, wobei an den Zwischenkreis (ZK) ein zusätzlicher Wechselrichter und an dessen Ausgang ein Transformator angeschlossen ist.

6. Verfahren nach Anspruch 5, wobei der Wechselrichter eines, für den Betrieb eines Drehstrommotors vorgesehenen Standard-Moduls verwendet wird.

7. Verfahren nach Anspruch 5 oder 6, wobei Mittel zur Glättung der Ausgangsspannung des zusätzlichen Wechselrichters vorgesehen sind.

8. Verfahren nach einem der Ansprüche 5 bis 7, wobei an der Sekundärseite des Transformators eine Gleichspannung zur Versorgung der Regelkreise der numerischen Steuerung gebildet wird.

## Claims

1. Method for preventing damage to numerically controlled machines in the event of a power failure, wherein
1.1 the numerically controlled machine has at least two controlled axle drive motors (M1...Mn) which are supplied from a direct current intermediate circuit (ZK) by way of a respective converter (W1...Wn),
1.2 in the event of a power failure at least one motor (M1) is switched into generator operation and is controlled by way of the associated converter (W1) in such a way that the intermediate circuit power is maintained for the period of the slowing-down of this at least one motor (M1),
1.3 the additional motors (M2...Mn) during this period continue to be supplied from the intermediate circuit (ZK) and the machining operations are discontinued by activating the associated additional axle drives with a position-controlled, programmed emergency withdrawal of the tool from the workpiece.

2. Method according to claim 1, wherein
2.1 to control the generator operation a controlled variable (U_{R}) is formed from the actual voltage value (U_{I}) of the intermediate circuit (ZK) and an entered desired voltage value (U_{S}),
2.2 a torque-proportional variable as braking torque (m_{B}) is generated from the controlled variable and is transmitted to the regulating circuit of the generator in place of the desired torque (m_{S}).

3. Method according to claim 2, wherein in the regulating circuit (RK1) of the generator (M1) changeover means are provided which, in the event of a power failure, disconnect the speed controller (DR) from the controlled system and apply the braking torque (m_{B}).

4. Method according to claim 2 or 3, wherein the braking torque (m_{B}) is only transmitted to the controlled system of the regulating circuit (RK) for values greater than zero and no torque is entered for values less than zero.

5. Method according to one of the preceding claims, wherein an additional inverter is connected to the intermediate circuit (ZK) and a transformer is connected to the output of the inverter.

6. Method according to claim 5, wherein the inverter of a standard module provided for operating a three-phase motor is used.

7. Method according to claim 5 or 6, wherein means are provided for smoothing the output voltage of the additional inverter.

8. Method according to one of claims 5 to 7, wherein at the secondary side of the transformer a direct voltage for supplying the regulating circuits of the numerical control is formed.

## Revendications

1. Procédé destiné à prévenir les détériorations sur des machines à commande numérique en cas de panne de secteur, d'après lequel
1.1 la machine à commande numérique présente au moins deux moteurs d'entraînement d'axe (M1...Mn) asservis, qui sont alimentés à partir d'un circuit intermédiaire de courant continu (ZK), chacun par l'intermédiaire d'un convertisseur (W1...Wn),
1.2 en cas de panne de secteur, au moins un moteur (M1) est commuté en mode de fonctionnement en générateur et est asservi par l'intermédiaire du convertisseur (W1) associé de façon telle, que l'énergie de circuit intermédiaire reste maintenue pour la durée de fin de marche par inertie dudit au moins un moteur (M1),
1.3 les autres moteurs (M2...Mn) continuent à être alimentés pendant cette durée, à partir du circuit intermédiaire (ZK), et les opérations d'usinage sont interrompues par une commande des autres entraînements d'axe associés engendrant un retrait d'urgence programmé et asservi en position de l'outil hors de la pièce.

2. Procédé selon la revendication 1, d'après lequel
2.1 pour la régulation du fonctionnement en générateur, on forme une grandeur de régulation (U_{R}) à partir de la valeur réelle de tension (U_{I}) du circuit intermédiaire (ZK) et d'une valeur de consigne de tension (U_{S}) prescrite,
2.2 à partir de la grandeur de régulation on élabore une grandeur proportionnelle au couple en tant que couple de freinage (m_{B}), et on l'applique à la place du couple de consigne (m_{S}) à la boucle d'asservissement du générateur.

3. Procédé selon la revendication 2. d'après lequel dans la boucle de régulation (RK1) du générateur (M1) sont prévus des moyens de commutation, qui en cas de panne de secteur isolent le régulateur de vitesse de rotation (DR) du système asservi et appliquent à ce dernier le couple de freinage (m_{B}).

4. Procédé selon la revendication 2 ou 3, d'après lequel le couple de freinage (m_{B}) n'est appliqué que pour des valeurs supérieures à zéro au système asservi de la boucle d'asservissement (RK), et aucun couple n'est prescrit pour des valeurs inférieures à zéro.

5. Procédé selon l'une des revendications précédentes, d'après lequel au circuit intermédiaire (ZK) est raccordé un onduleur supplémentaire et à la sortie de celui-ci un transformateur.

6. Procédé selon la revendication 5, d'après lequel on utilise l'onduleur d'un module standard prévu pour le fonctionnement d'un moteur à courant triphasé.

7. Procédé selon la revendication 5 ou 6, d'après lequel des moyens sont prévus pour le lissage de la tension de sortie de l'onduleur supplémentaire.

8. Procédé selon l'une des revendications 5 à 7, d'après lequel on forme au secondaire du transformateur, une tension continue pour alimenter la boucle de régulation de la commande numérique.
